## Europäisches Patentamt

## European Patent Office

## Office européen des brevets

(11) Veröffentlichungsnummer: **0 339 380 B1**

## EUROPÄISCHE PATENTSCHRIFT

(45) Veröffentlichungstag der Patentschrift: **19.11.92**

(51) Int. Cl.⁵: **F16D 1/02**

(21) Anmeldenummer: **89106589.8**

(22) Anmeldetag: **13.04.89**

(54) Vorrichtung zur koaxialen drehfesten Verbindung zweier Teile.

(30) Priorität: **28.04.88 DE 8805632 U**

(43) Veröffentlichungstag der Anmeldung:
**02.11.89 Patentblatt 89/44**

(45) Bekanntmachung des Hinweises auf die
Patenterteilung:
**19.11.92 Patentblatt 92/47**

(84) Benannte Vertragsstaaten:
**AT BE CH DE ES FR GB GR IT LI LU NL SE**

(56) Entgegenhaltungen:
EP-A- 0 088 589       DE-A- 3 711 163
DE-C- 3 712 195       FR-A- 1 304 987
FR-A- 2 279 972       GB-A- 1 205 199
GB-A- 2 019 528       US-A- 2 587 838
US-A- 3 847 248

(73) Patentinhaber: **SEW-EURODRIVE GMBH & CO.**
**Ernst-Blickle-Strasse 42**
**W-7520 Bruchsal(DE)**

(72) Erfinder: **Zimmermann, Heinrich**
**Wuttachstrasse 1**
**W-7523 Graben-Neudorf 1(DE)**
Erfinder: **Stapelfeldt, Thomas**
**Hauptstrasse 70**
**W-7528 Karlsdorf-Neuthard 2(DE)**

(74) Vertreter: **Dr.-Ing. Hans Lichti Dipl.-Ing. Heiner**
**Lichti Dipl.-Phys. Dr. Jost Lempert**
**Postfach 41 07 60 Bergwaldstrasse 1**
**W-7500 Karlsruhe 41(DE)**

Rank Xerox (UK) Business Services

**Beschreibung**

Die Erfindung betrifft eine Vorrichtung zur koaxialen, drehfesten, axial festlegbaren Verbindung eines Ritzels mit einer Antriebswelle eines Motors über eine eingreifende Außen- und Innenverzahnung und aufeinnanderliegenden Zylinderflächen eines Ritzelfortsatzes und der Antriebswelle, mit einem Querstift.

Bei den beiden miteinander zu verbindenden Teilen kann es sich um eine Welle, wie eine Motorwelle und insbesondere als zweites Teil um ein Ritzel handeln. Bisher wurden die entsprechenden Teile im allgemeinen durch Paßfederverbindungen oder kraftschlüssig gegen Verdrehung gesichert. Hierbei war entweder ein gewisses Spiel gegeben, oder kein Formschluß gewährleistet.

Die US-A-2 587 838 beschreibt einen Zapfwellenadapter für die Zapfwelle eines Schleppers. Die Verbindung des wellenartigen Adapters mit der Zapfwelle erfolgt durch eine eingreifende Außenbzw. Innenverzahnung. Damit läßt sich jedoch nur eine für eine Ritzelbefestigung mangelhafte koaxiale Führung der beiden Teile zueinander erzielen. Zur axialen Festlegung ist ein Spannstift vorgesehen, der durch den gesamten Querschnitt durchgeschlagen wird.

Die GB-A-2 019 528 beschreibt eine Wellenkupplung, die als Schnellwechselteil zur Verwendung bei einer langsam laufenden Walzeinrichtung dient. Dabei sind die beiden Kupplungsteile 6 und 8 nicht axial zueinander festgelegt.

Die EP-A1-0 088 589 beschreibt eine Anschlußeinrichtung zum Antrieb einer Viskositätskupplung. Zur Übertragung von Drehmomenten ist dabei jedoch weder eine Außen- noch eine Innenverzahnung vorgesehen.

Die FR-A-2 279 972 beschreibt eine Kupplungsvorrichtung für zwei zu koppelnde Hohlwellen. Dabei wird eine zentrische Schraube zur axialen Sicherung verwendet. Eine derartige Ausgestaltung ist für eine Ritzelbefestigung nicht sinnvoll, da zum einen der Ritzelquerschnitt geschwächt würde und zum anderen ein solches Ritzel nur sehr umständlich auszuwechseln wäre.

Die US-A-3 847 248 beschreibt eine Schmiereinrichtung für eine Mitnehmerverbindung zwischen einem Ritzel und einer Welle. Die Mitnehmerverbindung ist durch Splinte bzw. Paßfedern realisiert. Solche Verbindungen sind ungeeignet für wechselnde Drehmomentbelastungen aufgrund der dabei auftretenden Relativbewegung zwischen Welle und Ritzel. Dabei ist das Ritzel durch aufeinanderliegende Zylinderflächen koaxial zur Welle geführt und durch einen Sprengring gegen axiales Verschieben gesichert.

Die GB-A-1 205 199 beschreibt eine Verriegelungsvorrichtung für Wellen mit hohen Drehzahlen.

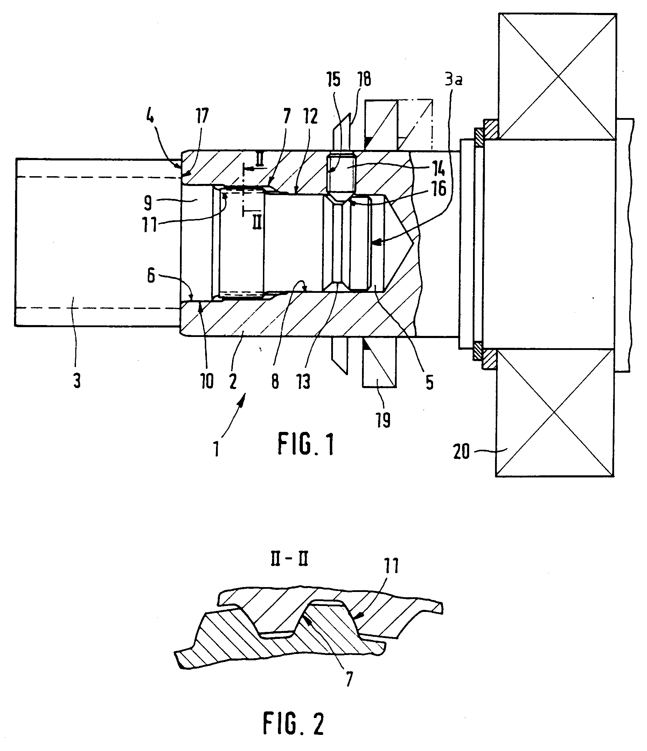

Dabei wird ein Hohlritzel beschrieben, das mit einer Innenverzahnung versehen auf einer entsprechend angepaßten Welle mit Außenverzahnung sitzt. Der koaxialen Führung dient eine Hohlzylinderfläche des Hohlritzels, die auf einer entsprechenden Außenzylinderfläche der Welle anliegt, und eine zweite Hohlzylinderfläche, die auf einer Außenzylinderfläche eines Sicherungsteils anliegt (Fig. 1).

Die DE-C-3 712 195 beschreibt eine Vorrichtung zur Feineinstellung der Drehwinkellage einer Welle zu einem mit dieser gleichachsig lösbar verbundenen Bauteil. Diese Vorrichtung ist insbesondere zur Einstellung der Drehwinkellage einer Lenkradnabe zu einer Lenkwelle gedacht. Dabei wird eine Buchse mit Außen- und Innenverzahnung zwischen Lenkwelle und Lenkradnabe angeordnet. Hierbei weist die Welle eine Außenverzahnung und die Lenkradnabe eine Innenverzahnung auf. Die Zentrierung der Lenkradnabe erfolgt über eine Innenzylinderfläche und eine Schrägfläche.

Die DE-A-3 711 163 beschreibt eine Vorrichtung zum lösbaren Festspannen von scheibenoder ringförmigen Walzen. Dabei wird eine drehfeste Verbindung zwischen einer Walze und einer Welle durch Reibschluß mittels einer vorgespannten Buchse realisiert.

Die FR-A-1 304 987 beschreibt eine Welle mit Außenverzahnung und ein weiteres Teil mit einer angepaßten Innenverzahnung. Die Verzahnungen sind so ausgeführt, daß eine koaxiale Führung des Teils bezüglich der Welle gegeben ist. Dabei erfolgt eine axiale Festlegung nur in einer Richtung.

Der Erfindung liegt die Aufgabe zugrunde, eine Vorrichtung zur lösbaren Verbindung eines Ritzels mit einer Antriebswelle zu schaffen, die eine gute Zentrierung und spielfreie, formschlüssige Verbindung beider Teile in einfacher Weise ermöglicht.

Erfindungsgemäß wird die genannte Aufgabe bei einer Vorrichtung der eingangs genannten Art dadurch gelöst, daß der Ritzelfortsatz zwei Außenzylinderwandungen und eine zwischen diesen angeordnete Außenverzahnung aufweist, daß die dem Ritzel nächstliegende Außenzylinderwandung des Ritzelfortsatzes einen größeren Durchmesser als die andere Außenzylinderwandung aufweist, daß die Antriebswelle am freien Ende zur Aufnahme des Wellenfortsatzes mit einer axialen Blindbohrung versehen ist, die mit zwei den Außenzylinderwänden angepaßten Hohlzylinderabschnitten und einer dazwischenliegenden Innenverzahnung so ausgebildet ist, daß bei eingestecktem Wellenfortsatz die Innen- und Außenverzahnungen zum Eingriff kommen und die beidseits derselben angeordneten Hohlzylinderabschnitte und entsprechenden Außenzylinderwandungen die koaxiale Führung des Ritzels bezüglich der Antriebswelle gewährleisten, daß der Querstift ein Quergewindestift ist, der in die Antriebswelle eingeschraubt ist und eine konische bzw. kegelstumpfartige Spitze aufweist, daß die dem Ritzel entferntere Außenzylinderwandung des Ritzelfortsatzes eine Ringnut mit an die Spitze angepaßtem Querschnitt zur Aufnahme des Quergewindestifts als Arretierungsmittel zur axialen Festlegung des Ritzels bezüglich der Antriebswelle aufweist, und daß die Achse des Quergewindestifts bei eingestrecktem Ritzelfortsatz in Richtung dessen freien Endes bezüglich der Zentralebene der Ringnut versetzt angeordnet ist, so daß bei eingedrehtem Quergewindestift Stirnseiten des Ritzels und der Antriebswelle als Widerlager zur Axialbefestigung gegeneinander verspannt sind.

Durch die erfindungsgemäße Ausgestaltung wird die Zentrierung der beiden miteinander zu verbindenden Teile über die Zylinderwandungen von der Drehmomentmitnahme über die Verzahnungsausbildungen getrennt. Hierdurch wird eine gute Zentrierung erreicht und eine spielfreie Drehmomentmitnahme ermöglicht. Die Verzahnungsausbildungen können in vielfältiger Weise ausgestaltet sein, als Vielteilprofile, als Evolventenverzahnungen, Zykloidenverzahnungen, Polygonprofile od.dgl.

Weitere Vorteile und Merkmale der Erfindung ergeben sich aus der nachfolgenden Beschreibung, in der ein Ausführungsbeispiel der Erfindung unter Bezugnahme auf die Zeichnung im einzelnen erläutert ist. Dabei zeigt:

Figur 1  Einen Längsschnitt durch die erfindungsgemäße Verbindungsvorrichtung; und

Figur 2  einen Schnitt durch die Verzahnung entsprechend II-II der Figur 1.

Die erfindungsgemäße Vorrichtung 1 dient zur drehfesten Verbindung zweier miteinander drehbarer Teile 2,3, wie insbesondere einer Welle 2, wie einer Motorwelle, und einem Ritzel 3 als zweites Teil. Das erste Teil 2 weist von seiner freien Stirnseite 4 ausgehend eine axiale Blindbohrung 5 auf, welche von der Stirnseite 4 ausgehend zunächst durch eine Zylinderwandung 6 gebildet ist, an die sich eine Innenverzahnung 7 anschließt, deren Nutendurchmesser höchstens so groß ist wie der Durchmesser der Zylinderwandung 6. Im dargestellten Ausführungsbeispiel schließt sich an die Innenverzahnung 7 eine weitere Innenzylinderwandung 8 an, deren Durchmesser höchstens so groß ist wie der Durchmesser der Zahnköpfe der Verzahnung 7.

In die Bohrung 5 ist ein Ansatz 9 des zweiten Teils 3 eingesetzt, der eine zu der beschriebenen Ausgestaltung der Bohrung 5 komplementäre Ausgestaltung und demgemäß eine Außenzylinderwandung 10 mit einem der Innenzylinderwandung 6 entsprechenden Durchmesser aufweist. Diesem Abschnitt schließt sich eine Außenverzahnung 11 an, die komplementär zur Innenverzahnung 7 ausgebildet ist. Hierauf folgt eine äußere Zylinderwandung 12 mit einem dem Durchmesser der Innenzylinderwandung 8 entsprechenden äußeren Durchmesser. An seinem freien Ende ist der Ansatz 9 des zweiten Teils 3 mit einer Ringnut 13 versehen. Auf der axialen Höhe der Ringnut 13 des Ansatzes 9 weist das erste Teil 1 zumindestens eine Quergewindebohrung 15 auf, in die ein Gewindestift 14 mit einem an die Ringnut 13 angepaßten, inneren Ende 16 eingeschraubt ist, der mit seinem Ende 16 an der Nut 13 des Ansatzes 9 angreift. Hierdurch wird das zweite Teil 3 axial festgelegt, indem es mit einer dem Teil 1 zugewandten Stirnseite 17 gegen die Stirnseite 4 des Teils 2 gezogen wird. Die Zentrierung der beiden Teile 2,3 relativ zueinander erfolgt über die Zylinderwandungsflächen 6,10 und 8, 12, während die Drehmomentmitnahme über die Verzahnungen 7,11 erfolgt. Drehmomentmitnahme und Zentrierung sind daher bei der erfindungsgemäßen Vorrichtung voneinander getrennt. Auf dem ersten Teil kann, wenn das Teil 2 eine Motorwelle ist, eine Schleuderscheibe oder Spritzscheibe 18 aufsitzen, um zu verhindern, daß ein aus dem z.B. Zahneingriff austretenden Ölstrahl an den Wellendichtring 19 gelangt. Ein Lager der Motorwelle 2 ist mit 20 bezeichnet.

**Patentansprüche**

1. Vorrichtung (1) zur koaxialen, drehfesten, axial festlegbaren Verbindung eines Ritzels (3) mit einer Antriebswelle (2) eines Motors über eine eingreifende Außen- und Innenverzahnung (7, 11) und aufeinanderliegenden Zylinderflächen (6, 10, 8, 12) eines Ritzelfortsatzes (9) und der Antriebswelle (2), mit einem Querstift (14),
**dadurch gekennzeichnet,**
daß der Ritzelfortsatz (9) zwei Außenzylinderwandungen (10, 12) und eine zwischen diesen angeordnete Außenverzahnung (11) aufweist,
daß die dem Ritzel (3) nächstliegende Außenzylinderwandung (10) des Ritzelfortsatzes (9) einen größeren Durchmesser als die andere Außenzylinderwandung (12) aufweist,
daß die Antriebswelle (2) am freien Ende zur Aufnahme des Ritzelfortsatzes (9) mit einer axialen Blindbohrung (5) versehen ist, die mit zwei den Außenzylinderwänden (10, 12) angepaßten Hohlzylinderabschnitten (6, 8) und einer dazwischenliegenden Innenverzahnung (7) so ausgebildet ist, daß bei eingestecktem Ritzelfortsatz (9) die Innen- und Außenverzahnungen (7, 11) zum Eingriff kommen und die beidseits derselben angeordneten Hohlzylinderabschnitte (6, 8) und entsprechenden Außenzylinderwandungen (10, 12) die koaxiale Führung des Ritzels (3) bezüglich der Antriebswelle (2) gewährleisten,

daß der Querstift ein Quergewindestift (14) ist, der in die Antriebswelle (2) eingeschraubt ist und eine konische bzw. kegelstumpfartige Spitze (16) aufweist,
daß die dem Ritzel (3) entferntere Außenzylinderwandung (12) des Ritzelfortsatzes (9) eine Ringnut (13) mit an die Spitze (16) angepaßtem Querschnitt zur Aufnahme des Quergewindestifts (14) als Arretierungsmittel zur axialen Festlegung des Ritzels (3) bezüglich der Antriebswelle (2) aufweist, und
daß die Achse des Quergewindestifts (14) bei eingestrecktem Ritzelfortsatz (9) in Richtung dessen freien Endes bezüglich der Zentralebene der Ringnut (13) versetzt angeordnet ist, so daß bei eingedrehtem Quergewindestift (14) Stirnseiten (4, 17) des Ritzels (3) und der Antriebswelle (2) als Widerlager zur Axialbefestigung gegeneinander verspannt sind.

## Claims

1. Device (1) for the coaxial, rotation-fixed, axially fixable connection of a pinion (3) to a driving shaft (2) of a motor by means of an engaging external and internal tooth system (7, 11) and mating cylinder surfaces (6, 10, 8, 12) of a pinion extension (9) and the driving shaft (2), with a transverse pin (14), characterized in that the pinion extension (9) has two outer cylinder walls (10, 12) and an external tooth system (11) positioned between them, that the outer cylinder wall (10) of the pinion extension (9) closer to the pinion (3) has a larger diameter than the other outer cylinder wall (12), that for receiving the pinion extension (9) the free end of the driving shaft (2) is provided with an axial blind hole (5), which is so constructed with two hollow cylinder portions (6, 8) adapted to the outer cylinder walls (10, 12) and an interposed internal tooth system (7) that when the pinion extension (9) is inserted engagement occurs between the internal and external tooth systems (7, 11) and the hollow cylinder portions (6, 8) arranged on either side thereof and the corresponding outer cylinder walls (10, 12) ensure the coaxial guidance of the pinion (3) with respect to the driving shaft (2), that the transverse pin is a transverse threaded pin (14), which is screwed into the driving shaft (2) and has a conical or frustum-like tip (16), that the outer cylinder wall (12) of the pinion extension (9) further removed from the pinion (3) has a circular groove (13) with a cross-section adapted to the tip (16) for receiving the transverse threaded pin (14) as an arresting means for the axial fixing of the pinion (3) relative to the driving shaft (2) and that the axis of the transverse threaded pin (14) with inserted pinion extension (9) in the direction of its free end is displaced with respect to the central plane of the circular groove (13), so that with the transverse threaded pin (14) inserted the front faces (4, 17) of the pinion (3) and the driving shaft (2) are braced against one another as abutments for axial fixing.

## Revendications

1. Dispositif (1) pour la fixation coaxiale, rigide en rotation et immobilisable dans le sens axial d'un pignon (3) avec un arbre primaire (2) d'un moteur par l'intermédiaire d'une denture extérieure et intérieure (7, 11) en prise l'une avec l'autre et de surfaces cylindriques (6, 10, 8, 12) d'un prolongement de pignon (9) et de l'arbre moteur (2) avec une broche transversale (14), appliquées les unes contre les autres, **caractérisé en ce** que le prolongement (9) du pignon présente deux parois cylindriques extérieures (10, 12) et une denture extérieure (11) placée entre ces dernières; que la paroi cylindrique extérieure (10) du prolongement (9) du pignon située le plus près du pignon (3) présente un diamètre plus grand que l'autre paroi cylindrique extérieure (12); que l'extrémité libre de l'arbre moteur (2) est munie, pour la réception du prolongement (9) du pignon, d'un trou borgne (5) axial qui, avec deux sections de cylindre creux (6, 8) adaptées aux parois cylindriques extérieures (10, 12) et une denture intérieure (7) placée entre ces deux sections, est conformé de telle façon que lorsque le prolongement (9) du pignon est emboîté, les dentures intérieure et extérieure (7, 11) viennent en prise et que les deux sections de cylindre creux (6, 8) disposées de part et d'autre desdites dentures et les parois cylindriques extérieures (10, 12) assurent le guidage coaxial du pignon (3) par rapport à l'arbre moteur (2); que la broche transversale est une tige transversale filetée (14) qui est vissée dans l'arbre moteur (2) et présente une pointe (16) de forme conique et respectivement tronconique; que la paroi cylindrique extérieure (12) du prolongement (9) du pignon plus éloignée du pignon (3) comprend une rainure annulaire (13) dont la section transversale est adaptée à la pointe (16) pour recevoir la tige transversale filetée (14) en tant que moyen d'arrêt pour la fixation axiale du pignon (3) par rapport à l'arbre moteur (2); et que, lorsque le prolongement (9) du pignon est engagé, l'axe de la tige transversale filetée (14) est décalé dans la direction de l'extrémité libre dudit prolongement par rapport au plan central de la rainure annulaire (13), de manière que lorsque la tige transversale filetée (14) est vissée, les surfaces frontales (4, 17) du pignon (3) et de l'arbre moteur (2) sont bloquées l'une contre l'autre et agissent comme butée pour la fixation axiale.

FIG. 1

II - II

FIG. 2